# EUROPEAN PATENT APPLICATION

(11) **EP 4 682 910 A1**
(43) Date of publication of application: **21.01.2026**
(21) Application number: 25189495.2
(22) Date of filing: 15.07.2025
(51) Int. Cl.: H01B 7/285, H01B 13/32

(54) **CONDUCTOR BLOCKING BY MEANS OF INTERMITTENT FILLING WITH TWO COMPONENT HARDENING COMPOSITION**

(30) Priority: 17.07.2024 NO 20240764
(71) Applicant: Nexans, 92400 Courbevoie (FR)
(72) Inventor: Bengtsson, Karl Magnus, 0687 Oslo (NO); Olsen, Elise, 1782 Halden (NO); Hewitt, Jan Øivind, 1777 Halden (NO); Sangar, Robin, 1445 Drøbak (NO)
(74) Representative: Acapo Onsagers AS

(57) **Abstract**

The present invention relates to the technical field of subsea power cables. More specifically, the invention relates to a subsea power cable comprising at least one cable core comprising a bundle of metal wires and more than one layer of a cured two-component hardening composition, wherein the more than one layer of the cured two-component hardening composition is intermittently provided along the longitudinal direction of the power cable. The present invention further relates to a method of manufacturing the power cable according to the invention.

## Description

### FIELD OF THE INVENTION

The present invention relates to the technical field of subsea power cables. More specifically, the invention relates to a subsea power cable for large water depth and a method for manufacturing such a subsea power cable.

### BACKGROUND

There is a general need for subsea power cables to deliver electric power subsea. After deployment, subsea power cables for large water depths are exposed to high water pressure. Typically, they are also exposed to mechanical loads imposed during dynamic movements of the cable from wave motions and subsea currents.

Subsea power cables use water barriers to keep the cable core comprising a bundle of metal wires dry. There is still the possibility that water enters the cable core. Local damage of the water blocking sheath around the inner cable including the cable core may cause water entering, for example. After having entered, the water can move in the longitudinal direction of the cable core in the voids between the metal wires of the bundle of metal wires. In the state of the art, the voids were filled with a polymeric material in order to protect the cable core from water entering it.

It is also well known that polymeric material is intermittently provided along the longitudinal direction of the power cable. The US 4 397 624 is an early publication on such techniques rendering a cable longitudinal watertight. An apparatus injects a polymeric material from outside a bundle of metal wires into the voids formed by the metal wires. The technique results in a cable having sections along the longitudinal direction where the voids are filled with the polymeric material and sections where the voids are not filled with the polymeric material. If water enters, the sections having polymeric material block the water from flowing in longitudinal direction.

Under extreme conditions, as in large water depths, the water blocking in the filled sections may not be sufficiently strong and water can move along the longitudinal direction of the power cable. Under high pressure, the adherence of the polymeric material onto the metal surface may be insufficient.

Research and development in view of water blocking inside the cable core focus on the adherence between the polymeric material and the metal surface of the cable wire. The assumption is that the increase in adherence between the polymeric material and the metal surface promotes superior water blocking properties. However, the increased adherence is associated with the drawback that the polymeric material is hardly removed in case of the need to repair the power cable. It would be desirable to find a solution to the problem of an increased water tightness together with an improved ability to remove the water blocking material in case of a need of removal, e.g. in case of the need to repair or the necessity of implementing cable joints.

A problem solved by the invention relates to the provision of a power cable and a method of its manufacturing, which power cable provides an increased strength to withstand water flowing along the longitudinal direction of the power cable. The increased strength to withstand water flowing along the longitudinal direction of the power cable, i.e. inside the cable core, refers to deep sea submarine power cables, in particular. Further, a problem solved by the invention relates to the provision of a power cable and a method of its manufacturing, which power cable provides an easy way to repair or an easy way of implementing cable joints.

### SUMMARY OF THE INVENTION

The invention's underlying problems are solved by the subject-matter of claim 1. A first aspect of the invention therefore relates to a power cable for subsea applications, which power cable comprises at least one cable core comprising a bundle of metal wires and more than one layer of a cured two-component hardening composition, wherein the metal wires of the bundle of metal wires are arranged in more than two radially assembled layers; and wherein one layer of the more than one layer of the cured two-component hardening composition is arranged between two of the more than one radially assembled layer of metal wires.

The cable core of a power cable comprises the metal conductor which comprises a bundle of metal wires which is known in the state of the art. Such a bundle forms radially arranged layers of metal wires. By such an arrangement, there are formed voids between two adjacent layers of the metal wires. Such voids again form layers between two adjacent metal wires. While the state of the art technology introduces a polymeric material at the stranding point of the bundle of metal wires, according to the present invention, precursors of the polymeric material are introduced in form of more than one layer. This is implemented in that the precursors of the polymeric material are introduced while stranding the metal wires to form the cable core. The precursors of the polymeric material represent uncured matter of the later cured two-component hardening composition.

According to the present invention, the polymeric material used for providing the water blocker is a two-component hardening composition which is formed by applying precursors of the two-component hardening composition which is then subjected to a hardening to become a cured two-component hardening composition. In other words, the term "cured two-component hardening composition" means that a thermoset material is formed by precursors of the cured two-component hardening composition, wherein at least two components form the precursors. When mixing the two components - which are not necessarily polymeric or resinous in nature - the components form the thermoset material by hardening or curing. State of the art solutions often use thermoplastic materials. In practice, the cable core is filled with butyl-based masses which is firstly heated to improve the viscosity and then injected from outside the cable core into the voids formed by the layers of metal wires. Any subsequent repair or jointing operation depends on proper filling having taken place in the factory. If water had entered the cable core, there is the need to cut back until no water is detected. The cut back requires removal of the thermoplastic material adhering to the surface of the metal wire. The use of thermoset materials improves the properties of the water blockers.

There is a further benefit when using a two-component hardening composition: The physical properties of the uncured two-component hardening composition can be tailored for the intended purpose. Especially the viscosity of the uncured two-component hardening composition can be adjusted such that the composition can be introduced to become a cable core material while stranding the metal wires to a bundle. State of the art techniques use a composition which is forced by pressure to enter the stranded metal wires. The application of the precursors of the polymeric matter requires an adaptation of its properties such that the cable core can be manufactured.

It is one part of the invention's core, that the material which becomes the water blocker is applied in form of more than one layer, which implies that the material must be introduced into the cable core, which is preferably done while the cable core being manufactured.

Without being bound to a theory, it can be assumed that the introduction of the material while the cable core being manufactured results in a more complete filling of microscopical voids in the cable core or it results in an improved application of the materials onto the surface of metal wires. As will be discussed below, the water blocking properties are however not improved due to an improved bonding strength of the polymeric material to the metal surface.

It is understood by a skilled person that the layers do not necessarily keep their physical form. When stranding the metal wires to form the bundle for the cable core the precursors of the two-component hardening composition may deform. The precursors applied in more than one layer will fill all voids in the cable core to be manufactured. There could possibly be a method step additionally forcing the precursors into the voids. The layers may even intertwine with one another. This may even improve the properties of the water blocker.

As discussed above, the introduction of the two-component hardening composition between the metal layers is associated with beneficial effects. Again, the filling of the voids seems to be more complete, or furthermore the microscopic structure of the polymeric material is possibly favorably affected.

Interestingly, it is not required to increase the adhesion force of the two-component hardening composition to the metal surface of the wire. The adhesion force surprisingly needs to be decreased for improving the water sealing properties, i.e. the water tightness, along the longitudinal direction of the cable core. Without being bound to a theory, it seems that the thermoset material functioning as the water blocking component reacts with compression after ingress of water such that the thermoset material exerts a force perpendicular to the metal surface affecting a tight sealing. The water blocking component thus acts like a plug which improves the tightness when pressing onto the plug. For that purpose, it requires that the adhesion force between the two-component hardening composition and the metal surface is low. This improves the plugging of the voids between the metal wires, since the swaging of the water blocking component in the longitudinal direction of the cable core reacts by pushing the water blocking component perpendicular to the surface of the metal wire. As a consequence, it might be beneficial to have the water blocking component introduced intermittently along the longitudinal direction of the cable core (cf. description below). The benefit associated with this plugging effect could be improved.

In one aspect, the two-component hardening composition exclusively binds to the metal surface by physical bindings. The two-component hardening composition is preferably chosen from those which do not chemically bind to the metal surface. Alternatively, the two-component hardening composition has - after being cured - a higher cohesion than adhesion to the metal wires.

In that the water blocking component, i.e. the cured two-component hardening composition, binds to the metal wire by physical bindings, only, the water blocking component can be more simply removed which renders repairing of the power cable or introducing of a cable joint much more efficient. The physical binding of the cured two-component hardening composition thus is associated with the beneficial technical effects of an improved water sealing and a simplified way of repairing or introducing a cable joint.

In one aspect, the two-component hardening composition is selected such that the two-component hardening composition is fully cured within 2 hours and 48 hours, more preferred 6 hours and 36 hours, most preferred 12 hours and 24 hours. The adjustment of curing time is of importance in the manufacturing of the power cable. The speed of stranding is in practice in a certain range. If the curing time is too fast, the performance of the water blocking component is impaired. On the other hand, if the curing time is too slow, the stranded wires might displace when intermediately storing the power cables on a drum. It turned out that the above curing times represent a form of best practice.

The term "fully cured" is understood such that more than 95% of the conversion of the two components has reacted. This can be observed via NMR spectroscopy which enables long-time measurement showing when no further conversion of the constituents of the two-component hardening composition is observed. The conversion of 95% can be more distinctively defined as the conversion follows an exponential decay.

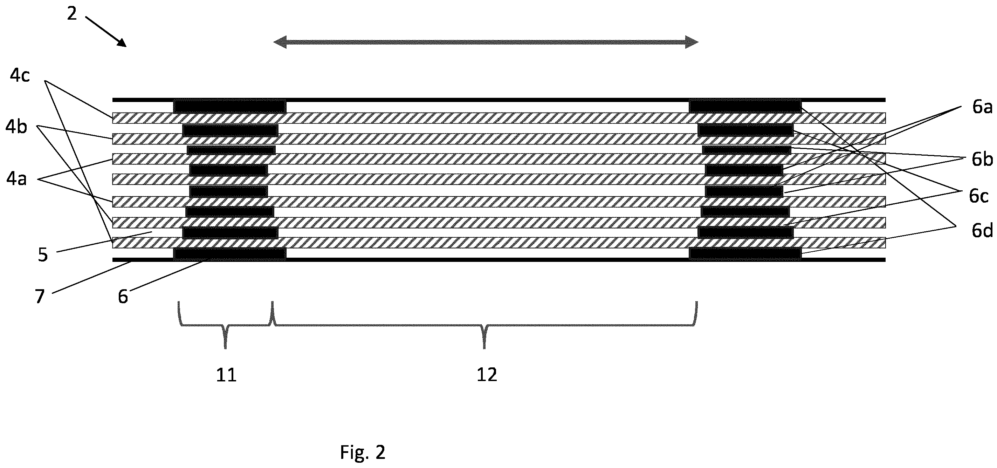

In one aspect, the more than one layer of the cured two component hardening composition is intermittently provided along the longitudinal direction of the power cable. According to this preferred embodiment of the invention, the cured two-component hardening composition "is intermittently provided along the longitudinal direction" of the power cable. This means that there are sections along the longitudinal direction of the power cable are provided with deposited layers of the cured two-component hardening composition separated by sections without any deposited layers of the cured two-component hardening composition. The meaning of the "longitudinal direction" is immediately clear from its word. It is also shown in Fig. 2: the longitudinal direction is the direction of the double arrow. The intermitted provision along the longitudinal direction of the power cable is favorable as the water blocking component works beneficially as a plug in the cable core.

In an alternative construction, the cable is constructed in a wet design, where no water barrier is used and water may migrate into XLPE insulation. Still these cables need conductor water blocking since an increased water ageing has been discovered by testing if no conductor filling is used. There is a need for an improved filling of the cable which allows omission of the water barrier layer without observing an increased aging due to water entering the cable core. If a new filling type could be found, a wet cable design may be applicable. Such a cable design could not be put in practice with an intermittent filling but with a filling all along the conductor.

In the process of manufacturing the power cable, the power cable is subjected to elevated temperatures. Experiments have shown that the increase in temperature does not result in an increase in the cable core's diameter. It was a concern that the provision of more than one layer of the cured two-component hardening composition resulted in an increase in the diameter of the cable core while manufacturing the power cable, which increase would be detrimental to the power cable. However, experiments have shown that this effect does not occur.

**In** one aspect, the cured two-component hardening composition is a thermoset material, preferably selected from the group consisting of a thermoset polyurethane, a thermoset epoxy resin, a thermoset silicone, a thermoset poly(meth)acrylate, and a thermoset polyester. It is most preferred that the cured two-component hardening composition is based on a polyurethane. The constituents of the precursors are separated in two distinguishable components being separated before being applied onto the cable.

In one aspect, the cured two-component hardening composition is a thermoset polyurethane having a Shore A hardness in the range of 50 to 70, preferably 52 to 68, more preferred 55 to 65, most preferred 58 to 62. In the framework of this application, the Shore A hardness is measured by a durometer which measures the depth of an indentation in the material created by a given force on a standardized presser foot. This depth is dependent on the hardness of the material, its viscoelastic properties, the shape of the presser foot, and the duration of the test. ASTM D2240 durometers are used for a measurement of Shore A in the present application.

In one aspect, the two-component hardening composition comprises a first component comprising a polymeric isocyanate and a second component comprising a polyol. It is preferred that precursors of the cured two-component hardening composition comprise at least one diisocyanate, at least one diol and at least one triol. The constituents are provided for application in two different components.

In one aspect, each layer of the more than one layer of the cured two-component hardening composition have at least one contact point to its adjacent layer of the more than one layer of the cured two-component hardening composition; or wherein each layer of the more than one layer of the cured two-component hardening composition is at least partly intermixing with its adjacent layer of the more than one layer of the cured two-component hardening composition. There are preferably no unfilled voids left where two adjacent layers of the two-component hardening composition meet.

In the manufacturing process of the cable core, the precursors of the cured two-component hardening composition are applied in the form of more than one layer. When the metal wires are stranded or when a further method step is applied, the layers are squeezed into the voids of the bundle of metal wires. In doing so, the materials of two adjacent layers approach one another, so they have at least one contact point. It is preferred that two adjacent layers are in contact throughout the section of the cable core where the water blockers are provided. The materials of two adjacent layers at least partly intermix, which means that the precursors of the cured two-component hardening composition intertwine. The arrangement of more than one layer changes during manufacturing of the cable core due to the fluid property of the precursor composition becoming the two-component hardening composition. The application of more than one layer results in an improved water blocking along the longitudinal direction of the power cable.

In one aspect, the metal wires of the bundle of metal wires are arranged in more than one radially assembled layer and one layer of the more than one layer of the cured two-component hardening composition is arranged between each of two of the more than one radially assembled layer of metal wires, wherein at least one of the layers of the two-component hardening composition is represented by a layer obtained by being squeezed in the voids between two radially assembled layers of metal wires.

According to this aspect, there is at least one layer of the cured two-component hardening composition being arranged between two of the more than one radially assembled layer (4a,b,c) of metal wires (3) by being squeezed in voids between the two adjacent layers of metal wires. This squeezed-in layer is obtained during the process of manufacturing the power cable. The method makes use of a step where the precursor of the two-component hardening composition is introduced while the bundle of metal wires is stranded. According to this aspect, one layer between two adjacent layers of metal wires is not directly provided with the precursor of the two-component hardening composition. However, one layer between two adjacent layers of metal wires is provided as excess precursor of the two-component hardening composition flowing from an adjacent layer into said one layer between two adjacent layers of metal wires. The excess portion of the precursor squeezes into the voids. This method of manufacturing is performed such that all voids in the bundle of metal wires are in fact filled with the two-component hardening composition. It turned out that this method had an impact on the adherence of the two-component hardening composition, wherein it is nevertheless guaranteed that all voids are in fact filled with the two-component hardening composition. This aspect represents one possible way of assembling the water blocking component into the voids between the metal wires forming the bundle of metal wires being the conductor of the cable core. However, it is more preferred that each layer between two adjacent layers of metal wires are filled with the two-component hardening composition. In other words, it is more preferred that all layers between two adjacent layers of metal wires are provided with the cured two-component hardening composition.

Thus, the feature according to which "the metal wires of the bundle of metal wires are arranged in more than two radially assembled layers; and wherein one layer of the more than one layer of the cured two-component hardening composition is arranged between two of the more than one radially assembled layer of metal wires" is more preferred put into practice by the feature according to which "each of the layers between two adjacent layers of metal wires are provided with the cured two-component hardening composition".

When stranding the metal wires, the metal wires may assemble in radial layers (cf. reference numbers 4a,b,d in the Figures). In the above preferred embodiment, there is always one layer between two adjacent layers of the metal wire.

In one aspect the stranded metal wires make up the electric conductor of the at least one cable core. The material for the stranded wires is selected among well-known conductive metals such as Cu and Al.

In one aspect, the bundle of metal wires has a diameter of 10 mm to 90 mm, preferably more than 10 mm to less than 90 mm, more preferred from 25 mm to 70 mm, even more preferred 40 to 60 mm, most preferred 42 to 58 mm.

The diameter is measured as the largest cross section of the bundle of metal wires. Power cables having a smaller diameter do not benefit from invention to such an extent as power cables do, which have a diameter in line with the preferred embodiment.

In one aspect, the bundle of metal wires consists of metal wires each having a circular or elliptical cross-section. In case of power cables which cable core comprises a bundle of metal wires each having a circular or elliptical cross-section, the voids being formed by the assembly of metal wires have a high cross-section area. This high cross-section area increases the risk of water flowing in the longitudinal direction of the cable core. The beneficial effect associated with the mechanism of acting as a plug (cf. description above) weights more because the mass which expands under pressure is higher. There is more polymeric material being deformed when water enters the cable core such that the material is pressed against the metal wires improving tightness. The sealing effect of the polymeric material is improved.

Therefore, the combination of introducing a thermoset material into the voids when the bundle of metal wires which each have a circular or elliptical cross-section improves the water sealing along the longitudinal direction of the cable core. Moreover, if said combination of introducing a thermoset material into the voids together with the use of metal wires having a circular or elliptical cross-section is further combined with the feature according to which the water blocking component, i.e. the cured two-component hardening composition, exclusively physically binding of the water blocking component to the metal wires improves the water blocking properties.

The power cable according to any one of the preceding, which power cable is a high voltage cable.

The term "high voltage" in the framework of the present application means voltages of 36 kV or more (IEC terms > 36 kV). Such cables benefit the most from the present application. With increasing voltage or energy transmitted, the power cable requires increased cable core diameters. The feature according to which more than one layer is applied provides improved properties of the water blocker especially when in case of cable cores being larger in diameter.

The invention's underlying problems are further solved by the subject-matter of claim 9. A second aspect of the invention therefore relates to a method of manufacturing a power cable comprising the steps of: providing metal wires and providing a filling die for applying a two-component hardening composition; stranding a first layer of metal wires; applying a first layer of the two-component hardening composition by the filling die; stranding a second layer of metal wires on the first layer of the two-component hardening composition; and hardening the two-component hardening composition to obtain a cured two-component hardening composition attached to the layers of metal wires.

The method according to the invention enables the manufacturing of a cable core where more than one layer is applied on the metal wire which again enables the provision of improved water blockers implemented with a cable core. **In** that a filling die - being an orifice connected to a reservoir for the precursors of the cured two-component hardening composition - is directed to a cable surface, the precursors can be applied onto a surface of the metal wire. Subsequently, metal wires are stranded onto the applied precursors of the cured two-component hardening composition. **In** that metal wires are stranded onto the precursors, the layers of the precursors change their form. The composition fills into the voids between the stranded metal wires. As a consequence, the layers of the two-component hardening composition may intertwine.

**In** one aspect, the method further comprising the steps of providing a second filling die for applying the two-component hardening composition; and applying the two-component hardening composition on the second layer of metal wires before the step of hardening.

In one aspect, different two-component compositions may be applied through different filling dies.

The sequence of steps of providing a further filling die, stranding a further layer of metal wired, applying the two-component hardening composition by the further filling die before the hardening can be repeated. When applying more than one layer, the steps of stranding metal wires and applying the precursors can be repeated several times. It is more preferred that all layers between two adjacent layers of metal wires are provided with the cured two-component hardening composition. Thus, according to this more preferred aspect, the method steps of
- stranding a first layer of metal wires;
- applying a first layer of the two-component hardening composition by the filling die;
- stranding a second layer of metal wires on the first layer of the two-component hardening composition;
are repeated such that all layers between two adjacent layers of metal wires are provided with the two-component hardening composition.

It is acknowledged that the "first layer" of metal wires is not necessarily the innermost layer of metal wires. Especially in those embodiments where not all layers between two adjacent layers of metal wires are filled with the two-component hardening composition, the first layer of metal wires could be the absolute second layer of metal wires counted from the center of the cable core. However, in the more preferred aspect, where all layers between two adjacent layers of metal wires are provided with the two-component hardening composition, either the first layer of metal wires is the innermost layer of metal wires or the innermost metal is a single metal wires forming the center of the cable core.

In one aspect, the step(s) of applying the two-component hardening composition is/are stopped while the step(s) of stranding of the metal wires continue(s) and thereby obtaining stranded metal wires comprising along the longitudinal direction of the stranded metal wires at least one section provided with the two-component hardening composition and at least one further section being devoid of the two-component hardening composition.

The method step of stopping the application enables the provision of a power cable having sections, where the power cable comprises the cured two-component hardening composition, and sections, where the power cable is devoid of the two-component hardening composition (cf. Figure 2).

In one aspect, the first filling die and the second filling die are arranged at distinguishing positions along the longitudinal direction of the metal wires and a controller controls the on-set of the step of applying the two-component hardening composition.

When considering the process of manufacturing, the first filling die and the second filling die are arranged at distinguishing positions along the longitudinal direction of the metal wires when stranding the metal wires in order to enable that the layers of the precursors of the cured two-component hardening composition can be applied to the metal wire. After a first layer of metal wires is stranded and a layer of the precursors is applied thereon, a further layer of metal wires is stranded thereon. Due to the continuous process of manufacturing the cable core, the second layer is deposited on the further layer of metal wires by a second filling die which is positioned at a different place compared to the filling die from which the first layer of the precursors is applied. The arrangement of the filling dies represents thus a possibility of applying more than one layer of the precursor of the two-component hardening composition onto the metal wires.

If the arrangement of two filling dies is to be implemented in combination with the intermittent provision of the two-component hardening composition along the longitudinal direction of the cable core, a controller can favorably used for the application of the precursor of the two-component hardening composition.

In one aspect, the hardening is performed at ambient temperature.

The choice of the precursors of the two-component hardening composition is made such that the hardening can be performed at ambient temperature. This preferred embodiment is associated with the beneficial effect of a simple process of manufacturing the power cable.

In one aspect, the step of providing the two-component hardening composition is performed by providing two separated reservoirs each one for one of the two components of the two-component hardening composition, and the step of applying the two-component hardening composition is performed by contacting the two components by extruding and contacting the extruded two-component hardening composition with the metal wires, wherein the time between contacting of the two components and contacting the extruded two-component hardening composition with the metal wires amounts to 10 sec to 5 min, preferably 20 sec to 2 min, more preferred 30 sec to 1 min.

The choice of the precursors of the two-component hardening composition is made such that the hardening can be performed at ambient temperature. This preferred embodiment is associated with the beneficial effect of a simple process of manufacturing the power cable.

In one aspect, the method of manufacturing the power cable comprises further the steps of finishing manufacturing of the power cable to obtain a finished power cable and placing the finished power cable on a drum, wherein the time between applying the two-component hardening composition on the first layer of metal wires and placing the finished power cable on the drum amounts to 2 hours and 48 hours, more preferred 6 hours and 36 hours, most preferred 12 hours and 24 hours.

This aspect takes into account that the method of manufacturing is a continuous process. The application of the two-component hardening composition is approximately performed with the same speed as the positioning of the finished power cable on the drum. The above time ranges represent preferred embodiments of the claimed method taking advantage of the preferred curing times of the two-component hardening composition.

The invention's underlying problems are further solved by the subject-matter of claim 15. A second aspect of the invention therefore relates to the use of a power cable according to the invention in subsea applications in more than 3.000 m under the sea level.

In one aspect, the use relates to a power cable comprising a cable core comprising a bundle of metal wires arranged in more than two radially assembled layers having arranged a layer of a cured two-component hardening composition being arranged between two of the more than one radially assembled layer of metal wires, wherein the cured two-component hardening composition is intermittently provided along the longitudinal direction of the power cable. There is thus at least one layer of the cured two-component hardening composition arranged between two adjacent layers of metal wires, wherein the cured two-component hardening composition is intermittently provided along the longitudinal direction of the power cable. If such power cables are used in deep sea, the intermittently provided water blocking material functions as a plug sealing the inner part of the power cable.

In one aspect, the use relates to a power cable comprising a cable core comprising a bundle of metal wires comprising metal wires each having a circular or elliptical cross-section. The beneficial effects associated with the use of the two-component hardening composition can be more beneficially exploited, when the metal wires have a circular or elliptical cross-section.

Features being solely disclosed in connection with the device of the invention are deemed to be disclosed in connection with the methods or the use of the invention and vice versa.

### BRIEF DESCRIPTION OF THE DRAWINGS

Certain aspects of the presently disclosed subject-matter will be described with reference to the accompanying drawings, which are representative and schematic in nature and are not be considered to be limiting in any respect as it relates to the scope of the subject-matter disclosed herein:
Figure 1 depicts a simplified scheme of the power cable showing aspects of the invention;
Figure 2 depicts a longitudinal cross-section of the cable core; and
Figure 3 depicts a 3D image of a cable core with filled voids between the metal wires.

### DESCRIPTION OF EMBODIMENTS

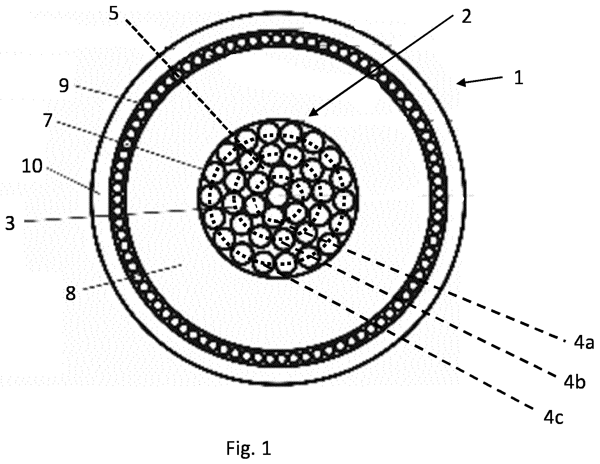

Fig. 1 shows a schematic drawing of a power cable 1 displaying the features of the invention. The cable core 2 comprises conductive metal wires 3 forming a bundle of metal wires. The stranding of the metal wires 3 result in the provision of layers (4a, 4b, 4c) of metal wires indicated in Fig. 1 by the dotted lines. If the center of each respective metal wire is connected by a notional line, metal layers 3 form such layers (4a, 4b, 4c). In Fig. 1, the notional line forms a cycle. Three layers (4a, 4b, 4c) are present in that cable core 2. It might be possible in embodiments which also belong to the invention that the notional line is not a perfect cycle but e.g. an irregular circle-like form. The voids 5 between the metal wires 3 can be filled with the two-component hardening composition 6. According to the invention, the voids 5 are filled intermittently along the longitudinal direction of the power cable 1. An example of the intermittent provision of water blockers is shown in Fig. 2.

The power cable 1 of Fig. 1 has a water barrier sheath 7 surrounding the metal wires 3. Such water barrier sheath prevents water from entering the cable core 2. However, it cannot always be ensured that the water barrier sheath 7 is free of small defects. If water enters the cable core the intermittent provision of the two-component hardening composition 6 prevents water from flowing along the longitudinal direction. In other embodiments the water barrier or an additional water barrier may be arranged on the power cable enclosing the insulation layer and semiconduction layers as well as the cable core.

The power cable 1 according to the exemplary embodiment of Fig. 1 further comprises an insulator layer 8, a shield 9 and a further insulator layer. It is emphasized that Fig. 1 exhibits only an exemplary embodiment showing some of the features of the invention. Of course, a power cable in line with the invention can also comprise three cable cores. A power cable of the invention can also have further layers between the cable core and the further layers shown in Fig. 1. In other words, Fig. 1 is by no means understood to limit the scope of the claimed invention.

Fig. 2 depicts a longitudinal cross-section of the cable core 2, which shows the intermittent provision of water blockers along the longitudinal direction of the power cable 1, in particular. The double arrow in Fig. 2 refers to the meaning of the longitudinal direction of the power cable 1. Fig. 2 shows the layers (4a, 4b, 4c) of the cable core 2 being provided with the cured two-component hardening composition 6 in the voids 5 left by the wires 3.

The cured two-component hardening composition 6 is provided in different layers (6a, 6b, 6c, 6d) in Fig. 2. It is understood by a skilled person that the layers of the cured two-component hardening composition 6 is applied by the precursors of the cured two-component hardening composition 6, which precursors have fluid properties for the time of during the manufacturing process of the power cable. When outer layers are stranded, the precursors deposited on the inner layers of metal wires 3 may flow and spread within the cable core 2 while being manufactured.

Fig. 2 shows two different sections 11 and 12 of the cable core 2. Section 11 represents a section comprising the cured two-component hardening composition 6 and section 12 represents a section being devoid of the cured two-component hardening composition. Section 11 thus provides the water blocker which prevents water in the cable from flowing through the power cable 1 in longitudinal direction. As can be seen in Fig. 2, the layers of the cured two-component hardening composition may have in the center part of the cable a length in longitudinal direction being smaller than in outer parts of the cable core. The length of the water blocker in longitudinal direction is a medium length in longitudinal direction.

One benefit associated with the intermittent provision of the water blocker refers to a simplified means to provide cable joint. These can be provided in sections 12 in a simplified way.

In the process of manufacturing the power cable, the power cable is subjected to elevated temperatures. Experiments have shown that the increase in temperature does not result in an increase in the cable core's diameter. It was a concern that the provision of more than one layer of the cured two-component hardening composition resulted in an increase in the diameter of the cable core while manufacturing the power cable, which increase would be detrimental to the power cable. However, experiments have shown that this effect does not occur.

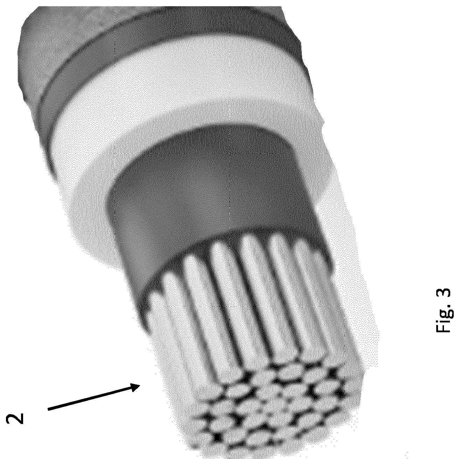

Fig. 3 shows a 3D image of a cable core with filled voids. Different from Fig. 1, Fig. 3 shows an alternative of a power cable which is not armoured. The power cable in Fig. 3 shows a bundle of wires having in the center of the bundle one central wire. Attached to this central wire, there is a first layer of wires, whereupon attached thereto, there is a further layer of wires. In the void of the wires there is shown the filled component. According to the present invention, this filled component is the cured two-component hardening composition. According to the invention, the precursor of this cured two-component hardening composition is applied in layers to the wires while stranding.

### EXPERIMENT

A prototype of a 2,000 mm² round wire conductor was manufactured. As for the wire metal, both Al and Cu were used. The wire conductor comprised a full profile of water blocking material comprising a polyurethane as the thermoset material. The curing was performed under typical conditions for 24 hours.

The cable ends were subjected to a 10 days test of forced water ingress at 75 bar (absolute). The prototype was able to withstand water ingress into the cable core.

The experiment underlines superior water blocking properties. Even if circular wires are used, the cable core withstands water ingress into the cable core, even under severe pressure conditions.

The following items are disclosed herewith:
1. A power cable (1) for subsea applications, which power cable comprises
   - at least one cable core (2) comprising a bundle of metal wires (3) and
   - more than one layer (6a,b) of a cured two-component hardening composition (6).
2. The power cable (1) according to item 1, wherein the more than one layer (6a,b) of the cured two-component hardening composition (6) is intermittently provided along the longitudinal direction of the power cable (1).
3. The power cable (1) according to item 1 or item 2, wherein the cured two-component hardening composition (6) is a thermoset material, preferably selected from the group consisting of a thermoset polyurethane, a thermoset epoxy resin, a thermoset silicone, a thermoset poly(meth)acrylate, and a thermoset polyester.
4. The power cable (1) according to any one of the preceding items, wherein the cured two-component hardening composition (6) is a thermoset polyurethane having a Shore A hardness in the range of 50 to 70, preferably 52 to 68, more preferred 55 to 65, most preferred 58 to 62.
5. The power cable (1) according to any one of the preceding items, wherein the two-component hardening composition (6) comprises a first component comprising a polymeric isocyanate and a second component comprising a polyol.
6. The power cable (1) according to any one of the preceding items, wherein each layer of the more than one layer (6a,b) of the cured two-component hardening composition have at least one contact point to its adjacent layer of the more than one layer of the cured two-component hardening composition; or
   wherein each layer of the more than one layer of the cured two-component hardening composition (6a,b) is at least partly intermixing with its adjacent layer of the more than one layer of the cured two-component hardening composition (6a,b).
7. The power cable (1) according to any one of the preceding items, wherein the metal wires (3) of the bundle of metal wires (3) are arranged in more than one radially assembled layers (4a,b,c) and one layer of the more than one layer of the cured two-component hardening composition (6a,b,c,d) is arranged between each of two of the more than one radially assembled layer (4a,b,c,d) of metal wires (3).
8. The power cable (1) according to any one of the preceding items, wherein the bundle of metal wires (3) has a diameter of 10 mm to 90 mm, preferably more than 10 mm to less than 90 mm, more preferred from 25 mm to 70 mm, even more preferred 40 to 60 mm, most preferred 42 to 58 mm.
9. A method of manufacturing a power cable (1) comprising the steps of:
   - providing metal wires (3) and providing a filling die for applying a two-component hardening composition;
   - stranding a first layer (4a) of metal wires (3);
   - applying a first layer of the two-component hardening composition (6b) by the filling die;
   - stranding a second layer (4b) of metal wires (3) on the first layer (4a) of the two-component hardening composition (6b); and
   - hardening the two-component hardening composition to obtain a cured two-component hardening composition (6) attached to the layers of metal wires (3).
10. Method according to item 9, further comprising the steps of
   - providing a second filling die for applying the two-component hardening composition; and
   - applying the two-component hardening composition (6c) on the second layer (4a) of metal wires (3) before the step of hardening.
11. Method according to item 9 or item 10, wherein
   - the step(s) of applying the two-component hardening composition is/are stopped while the step(s) of stranding of the metal wires (3) continue(s) and thereby obtaining stranded metal wires (3) comprising along the longitudinal direction of the stranded metal wires (3) at least one section (11) provided with the two-component hardening composition (6) and at least one further section (12) being devoid of the two-component hardening composition (6).
12. Method according to item 10 or item 11, wherein the first filling die and the second filling die are arranged at distinguishing positions along the longitudinal direction of the metal wires (3) and a controller controls the on-set of the step of applying the two-component hardening composition (6).
13. Method according to items 9 to 12, wherein the hardening is performed at ambient temperature.
14. Method according to items 9 to 13, wherein the step of providing the two-component hardening composition is performed by providing two separated reservoirs each one for one of the two components of the two-component hardening composition, and the step of applying the two-component hardening composition is performed by contacting the two components by extruding and contacting the extruded two-component hardening composition with the metal wires, wherein the time between contacting of the two components and contacting the extruded two-component hardening composition with the metal wires amounts to 10 sec to 5 min, preferably 20 sec to 2 min, more preferred 30 sec to 1 min.
15. Use of a power cable (1) according to one of items 1 to 8 in subsea applications in more than 3.000 m under the sea level.

### REFERENCE LIST

- 1: power cable
- 2: cable core
- 3: metal wire
- 4: layers of metal wires
- 4a,b,c: first, second, third layer of metal wires
- 5: void
- 6: cured two-component hardening composition
- 6a,b,c,d: first, second, third, fourth layer of cured two-component hardening composition
- 7: water barrier sheath
- 8: insulator layer
- 9: shield
- 10: further insulator layer
- 11: section of power cable with cured two-component hardening composition
- 12: section of power cable being devoid of cured two-component hardening composition

## Claims

1. A power cable (1) for subsea applications, which power cable comprises
- at least one cable core (2) comprising a bundle of metal wires (3) and
- more than one layer (6a,b) of a cured two-component hardening composition (6), **characterized in that**
the metal wires (3) of the bundle of metal wires (3) are arranged in more than two radially assembled layers (4a,b,c); and wherein one layer of the more than one layer of the cured two-component hardening composition (6a,b,c,d) is arranged between two of the more than one radially assembled layer (4a,b,c) of metal wires (3).

2. The power cable (1) according to claim 1, wherein the more than one layer (6a,b) of the cured two-component hardening composition (6) is intermittently provided along the longitudinal direction of the power cable (1).

3. The power cable (1) according to claim 1 or claim 2, wherein the cured two-component hardening composition (6) is a thermoset material, preferably selected from the group consisting of a thermoset polyurethane, a thermoset epoxy resin, a thermoset silicone, a thermoset poly(meth)acrylate, and a thermoset polyester.

4. The power cable (1) according to any one of the preceding claims, wherein the cured two-component hardening composition (6) is a thermoset polyurethane having a Shore A hardness in the range of 50 to 70, preferably 52 to 68, more preferred 55 to 65, most preferred 58 to 62.

5. The power cable (1) according to any one of the preceding claims, wherein the two-component hardening composition (6) comprises a first component comprising a polymeric isocyanate and a second component comprising a polyol.

6. The power cable (1) according to any one of the preceding claims, wherein each layer of the more than one layer (6a,b) of the cured two-component hardening composition have at least one contact point to its adjacent layer of the more than one layer of the cured two-component hardening composition; or
wherein each layer of the more than one layer of the cured two-component hardening composition (6a,b) is at least partly intermixing with its adjacent layer of the more than one layer of the cured two-component hardening composition (6a,b).

7. The power cable (1) according to any one of the preceding claims, wherein at least one layer of the cured two-component hardening composition (6a,b,c,d) is arranged between two of the more than one radially assembled layer (4a,b,c) of metal wires (3) by being squeezed in voids between the two adjacent layers of metal wires (3).

8. The power cable (1) according to any one of the preceding claims, wherein the bundle of metal wires (3) has a diameter of 10 mm to 90 mm, preferably more than 10 mm to less than 90 mm, more preferred from 25 mm to 70 mm, even more preferred 40 to 60 mm, most preferred 42 to 58 mm.

9. A method of manufacturing a power cable (1) comprising the steps of:
- providing metal wires (3) and providing a filling die for applying a two-component hardening composition;
- stranding a first layer (4a) of metal wires (3);
- applying a first layer of the two-component hardening composition (6b) by the filling die;
- stranding a second layer (4b) of metal wires (3) on the first layer (4a) of the two-component hardening composition (6b); and
- hardening the two-component hardening composition to obtain a cured two-component hardening composition (6) attached to the layers of metal wires (3).

10. Method according to claim 9, further comprising the steps of
- providing a second filling die for applying the two-component hardening composition; and
- applying the two-component hardening composition (6c) on the second layer (4a) of metal wires (3) before the step of hardening.

11. Method according to claim 9 or claim 10, wherein
- the step(s) of applying the two-component hardening composition is/are stopped while the step(s) of stranding of the metal wires (3) continue(s) and thereby obtaining stranded metal wires (3) comprising along the longitudinal direction of the stranded metal wires (3) at least one section (11) provided with the two-component hardening composition (6) and at least one further section (12) being devoid of the two-component hardening composition (6).

12. Method according to claim 10 or 11, wherein the first filling die and the second filling die are arranged at distinguishing positions along the longitudinal direction of the metal wires (3) and a controller controls the on-set of the step of applying the two-component hardening composition (6).

13. Method according to claims 9 to 12, wherein the hardening is performed at ambient temperature.

14. Method according to claims 9 to 13, wherein the step of providing the two-component hardening composition is performed by providing two separated reservoirs each one for one of the two components of the two-component hardening composition, and the step of applying the two-component hardening composition is performed by contacting the two components by extruding and contacting the extruded two-component hardening composition with the metal wires, wherein the time between contacting of the two components and contacting the extruded two-component hardening composition with the metal wires amounts to 10 sec to 5 min, preferably 20 sec to 2 min, more preferred 30 sec to 1 min.

15. Use of a power cable (1) according to one of claims 1 to 8 in subsea applications in more than 3.000 m under the sea level.
